(19) Europäisches Patentamt
European Patent Office
Office européen des brevets

(11) **EP 2 901 862 B1**

(12) **EUROPÄISCHE PATENTSCHRIFT**

(45) Veröffentlichungstag und Bekanntmachung des Hinweises auf die Patenterteilung:
**27.07.2016   Patentblatt 2016/30**

(51) Int Cl.:
***A22C 7/00*** (2006.01)

(21) Anmeldenummer: **14153080.8**

(22) Anmeldetag: **29.01.2014**

(54) **Verfahren und Vorrichtung zum Herstellen von geformten Lebensmitteln**

Method and device for producing moulded food items

Procédé et dispositif de fabrication de produits alimentaires conditionnés

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.08.2015   Patentblatt 2015/32**

(73) Patentinhaber: **Albert Handtmann Maschinenfabrik GmbH & Co. KG**
**88400 Biberach (DE)**

(72) Erfinder: **Schmid, Klaus**
**88499 Riedlingen (DE)**

(74) Vertreter: **Grünecker Patent- und Rechtsanwälte PartG mbB**
**Leopoldstraße 4**
**80802 München (DE)**

(56) Entgegenhaltungen:
**WO-A1-2012/161577          WO-A1-2013/115647**
**DE-A1-102004 029 408**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zum Herstellen von geformten Lebensmitteln gemäß den Oberbegriffen der Ansprüche 1 und 14.

Verfahren und Vorrichtungen zum Herstellen von geformten Lebensmitteln, wie z.B. Chicken Nuggets, Formschnitzel, Pressfleisch, Kartoffelformprodukte etc. sind bereits aus dem Stand der Technik bekannt (vgl. WO 2012/161577 A1).

Die bekannten Vorrichtungen weisen dabei eine Fördereinrichtung auf, beispielsweise eine Flügelzellenpumpe, die Lebensmittelmasse aus einem Trichter in ein Zuführrohr leitet. Aus diesem Zuführrohr wird die Lebensmittelmasse in Formen unter einem konstanten Druck eingefüllt. Die Formen sind dabei beispielsweise um den Umfang einer Trommel angeordnet, so dass die Formen nacheinander gefüllt werden können. Die Befüllung von Behältnissen kann dabei in folgende Ablaufschritte aufgeteilt werden:

1. Erkennung der Form am Zuflussrohr, 2. Befüllen der Form, 3. Verschließen der Form unter definiertem konstantem Druck.

Diese Schritte werden zyklisch wiederholt. Schritt 1, das Erkennen, dass sich die Form in der Abfüllposition befindet, kann beispielsweise über einen Positionssensor oder einen Drucksensor während der Produktion erfolgen.

Beim Befüllen der Form ist es erforderlich, die Luft in der Form zu verdrängen, wofür es mehrere Möglichkeiten gibt: Die Luft kann durch kleine Spalte entweichen, die Luft wird über ein Vakuum abgesaugt, das Behältnis wird durch die Befüllung mit Füllgut auf das endgültige Volumen gebracht, d.h. es wird beispielsweise ein Zylinder befüllt, dessen Kolben durch das Füllgut auf Endanschlag gedrückt wird.

Die Befüllung erfolgt so, dass das Förderwerk in Abhängigkeit des Drucks in der Form bzw. im Zuflussrohr oder Förderwerksauslass angesteuert wird. Dazu kann ein entsprechender Sensor vorgesehen sein, der einen Ist-Wert mit einem Soll-Wert vergleicht. Eine entsprechende Druckregelung kann auch über einen Druckregelzylinder erfolgen.

Nach dem Befüllen der Form erfolgt das Verschließen der Form unter dem eingestellten konstanten Druck.

Zuletzt werden die geformten Lebensmittelprodukte aus der Form ausgestoßen, indem beispielsweise ein Kolben die Masse mechanisch aus der Form drückt. Aus Formen, die mit Luftkanälen versehen sind oder aus luftdurchlässigem Sintermetall hergestellt sind, können die geformten Lebensmittelprodukte mit Druckluft ausgestoßen werden.

Die bekannten Lösungen weisen jedoch wesentliche Nachteile auf. Die Füllgeschwindigkeit muss manuell eingestellt werden. Die Einstellung der Füllgeschwindigkeit ist schwierig und erfordert viel Know How. Eine hohe Füllgeschwindigkeit führt infolge der trägen Regelung zu hohen Druckspitzen, wenn die Form voll ist. Bei einer zu niedrigen Füllgeschwindigkeit ist das Behältnis nicht voll, was zu Portionierungenauigkeiten führt. Bei einer Änderung, beispielsweise der Umlaufgeschwindigkeit der Formen, muss eine entsprechende Geschwindigkeitsjustierung erneut durchgeführt werden, wobei es bei falscher Einstellung zu hohen Druckspitzen kommt, die zu Ausschuss führen und im schlimmsten Fall die Form beschädigen.

Im Stand der Technik passiert es immer wieder, dass mit hoher Fördergeschwindigkeit gegen das volle oder verschlossene Behältnis gefördert wird. Insbesondere wenn sich die Formen in ihrer Geometrie und ihrem Volumen voneinander unterscheiden, ist eine exakte Befüllung schwierig. Auch die Kammererkennung über einen Positionsschalter ist bei unterschiedlichen Kammerformen schwierig. Bei Umrüsten auf andere Formen stimmt die Lage eines Positionsschalters zum Detektieren der Abfüllposition nicht mehr.

Hiervon ausgehend liegt der vorliegenden Erfindung die Aufgabe zugrunde, ein verbessertes Verfahren und eine verbesserte Vorrichtung zum Herstellen von geformten Lebensmitteln bereitzustellen, die ein zuverlässiges Füllen auch bei unterschiedlichen Formvolumina ermöglichen.

Erfindungsgemäß wird diese Aufgabe durch die Merkmale der Ansprüche 1 und 14 gelöst.

Gemäß der vorliegenden Erfindung wird während eines ersten Füllzeitabschnitts $t_1$ die Fördereinrichtung in einen ersten Füllmodus derart angesteuert, dass ein vorbestimmter Anteil des Füllvolumens der jeweiligen Form abgefüllt wird und anschließend, während eines zweiten Füllzeitabschnitts $t_2$ der restliche Anteil des Füllvolumens der jeweiligen Form in einem zweiten Füllmodus abgefüllt wird, indem die Fördereinrichtung in Abhängigkeit des Fülldrucks $p_{Füll}$ angesteuert wird, derart, dass sich ein vorbestimmter Fülldruck in der Form einstellt.

Somit setzt sich im Gegensatz zum Stand der Technik die Füllzeit $t_{Gesamt}$ in zwei Füllzeitabschnitte $t_1$ und $t_2$ zusammen, wobei im ersten Füllzeitabschnitt ein Hauptanteil des Füllvolumens in die jeweilige Form abgefüllt wird. Somit ist es möglich, in einem ersten Modus eine optimierte Volumenbefüllung vorzunehmen, bei der die Lebensmittelmasse über die Fördereinrichtung mit hoher Leistung ohne Druckregelung eingebracht wird. Dadurch, dass nun ein vorbestimmter Anteil in Modus A eingebracht wird, kann verhindert werden, dass kurz vor Füllende mit hoher Füllgeschwindigkeit gegen die volle Form gefördert wird. Hohe Druckspitzen, die das Lebensmittel oder im schlimmsten Fall die Form zerstören können, werden wirksam verhindert. In dem zweiten Füllzeitabschnitt $t_2$ kann dann der restliche Anteil, der kleiner ist als der Hauptanteil des Füllvolumens, abgefüllt werden, wobei hier eine Druckregelung erfolgt, d.h.

die Fördereinrichtung in Abhängigkeit des Fülldrucks angesteuert wird, derart, dass sich ein vorbestimmter Fülldruck in der Form einstellt, und zwar bevor das Behältnis anschließend wieder verschlossen wird, was zu einer hohen Portionsgenauigkeit führt.

Vorteilhafterweise ist der erste Füllzeitabschnitt $t_1$ größer als der zweite Füllzeitabschnitt $t_2$ und die mittlere Förderleistung der Fördereinrichtung 3 während des ersten Füllzeitabschnitts $t_1$ ist größer als während des zweiten Füllzeitabschnitts $t_2$. Das bedeutet, dass der Hauptteil mit großer Förderleistung während des ersten Abschnitts abgefüllt wird und die Förderleistung im zweiten Abschnitt herabgesetzt werden kann. Da also die Füllgeschwindigkeit im zweiten Füllzeitabschnitt $t_2$ reduziert ist, kann der Fülldruck auf einen vorbestimmten Wert geregelt werden, ohne dass es Druckspitzen gibt. Vorteilhafterweise wird dabei am Ende des ersten Füllzeitabschnitts die Leistung der Fördereinrichtung herabgesetzt. Unter dem Ausdruck "Ende des ersten Füllzeitabschnitts" versteht man, dass die Leistung bzw. Geschwindigkeit der Fördereinrichtung im letzten Drittel dieses Zeitabschnitts anfängt abzunehmen.

Im zweiten Füllmodus wird beispielsweise ein Soll-Wert für den Fülldruck vorgegeben und die Fördereinrichtung angetrieben, bis der Ist-Wert des Fülldrucks dem Soll-Wert entspricht. Der Fülldrucksensor kann beispielsweise im Auslassbereich der Fördereinrichtung oder in einer Zuführeinrichtung, insbesondere einem Zuflussrohr, die mit der Fördereinrichtung verbunden ist, vorgesehen sein. Die Regeleinrichtung hält den Soll-Wert für den Fülldruck vorzugsweise aufrecht. Es ist auch möglich, in einer Zufuhreinrichtung ein Druckausgleichgefäß in Form eines federbelasteten Druckausgleichzylinders vorzusehen, sprich einen Druckregelzylinder. Dadurch ergibt sich ein zusätzliches Totvolumen. Wenn die Form vollständig gefüllt ist, steigt auch der Druck in der Zuführeinrichtung, wodurch sich der federbelastete Kolben des Druckregelzylinders bewegt, was mit einem Positionssensor erkannt werden kann. Mit dem Positionssensorsignal wird dann die Fördereinrichtung gestoppt. Sinkt der Druck daraufhin, so bewegt sich der Kolben wieder nach innen, derart, dass ein bestimmtes Volumen verdrängt wird und ein bestimmter Druck aufrechterhalten werden kann bis die Form vollständig schliesst. Der Druck in der Form wird also durch die Federvorspannung des Druckregelzylinders eingestellt. Die Fördereinrichtung kann z.B. wieder in Gang gesetzt werden dadurch, dass der Positionsschalter wieder frei wird oder ein zweiter Positionsschalter erkennt, dass der eingestellte Druck nicht mehr erreicht ist.

Durch die exakte Druckregelung kann nicht nur eine exakte vollständige Befüllung der Formen realisiert werden, sondern auch eine gleichmäßige Kompression der Lebensmittelmasse.

Gemäß einer bevorzugten Ausführungsform werden die Formen mit ihrer Öffnung an einer Auslassöffnung der Zuführeinrichtung für die Lebensmittelmasse vorbeigeführt und vor nach dem Befüllen über eine insbesondere mit der Zuführeinrichtung verbundenen Abdeckung dicht verschlossen. Das bedeutet, dass die Formen, die sich auf der Umlaufbahn an der Auslassöffnung der Zuführeinrichtung vorbeibewegen, erst verschlossen sind, sich dann an einer Form-Öffnungs-Position zur Auslassöffnung hin öffnen, gefüllt werden, an der Auslassöffnung vorbeilaufen und an einer Form-Schließ-Position wieder verschlossen werden.

Es ist vorteilhaft, wenn vor dem Abfüllbeginn, d.h. bevor die Produktion der geformten Lebensmittel beginnt, die jeweilige Abfüllposition der n-Formen auf der Umlaufbahn bestimmt wird, insbesondere die jeweilige Form-Öffnungs-Position und die Form-Schließ-Position sowie das Füllvolumen der Formen. Das bedeutet, dass dann beispielsweise die Abfüllposition bzw. die Form-Öffnungs- und Form-Schließ-Position einer jeden Form einer entsprechenden Stellung oder Winkelposition einer Dreheinrichtung, z.B. Drehtrommel, mit der sich die Formen drehen, zugeordnet werden kann, insbesondere einer Stellung oder Winkelposition eines Antriebs der Dreheinrichtung, beispielsweise einer Drehwelle. Während des Betriebs kann dann beispielsweise über einen Drehgeber oder einen Positionsschalter die aktuelle Stellung der Dreheinrichtung bzw. des Antriebs für die Formen bestimmt werden, so dass dann während der Produktion exakt bestimmt werden kann, wenn eine Form in der Abfüllposition ist, bzw. die Form-Öffnungs-Position erreicht oder die Form-Schließ-Position erreicht. Dadurch, dass dann vor dem Verfahren die entsprechenden Positionen und Füllvolumina für jede einzelne Form bekannt sind, können die Anteile des Füllvolumens, die während der ersten und zweiten Füllzeitabschnitte abgefüllt werden, sowie die Zeitdauern der Füllabschnitte und die entsprechenden Förderleistungen, exakt vorausschauend eingestellt werden. Die entsprechenden Daten werden in einer Steuerung gespeichert.

Es ist besonders vorteilhaft, wenn zur Bestimmung der Abfüllposition der n-Formen und/oder zur Bestimmung des Füllvolumens der n-Formen die Vorrichtung vor dem eigentlichen Abfüllen der Lebensmittelmasse in einem Lernmodus betrieben wird, und die jeweiligen Abfüllpositionen (Form-Öffnungs-Positionen und Form-Schließ-Positionen) und Füllvolumina für die einzelnen Formen in einer Steuerung abgespeichert werden. Die einzelnen Prozessparameter werden dann entsprechend von der Steuerung berechnet. Es ist vorteilhaft, wenn vor der eigentlichen Produktion ein entsprechender Lernmodus erfolgt, da durch die Erfassung der Lage und des Volumens der zu befüllenden Formen ein optimales Füllprofil berechnet werden kann, was auch die Einstellung der Maschine vereinfacht. Auch bei Änderung der Formgeschwindigkeit (bzw. der Dreheinrichtung) ist keine manuelle Anpassung erforderlich. Das Verfahren funktioniert dann auch bei unterschiedlichen Kammerformen innerhalb einer Dreheinrichtung, d.h. z.B. Trommel bzw. eines um mindestens zwei Achsen umlaufendes Trommelband oder einer Drehscheibe.

Zur adaptiven Bestimmung der Form-Öffnungs-Position kann die Fördereinrichtung derart angesteuert werden, dass sich ein konstanter Soll-Wert für den Fülldruck einstellt, wobei die Form-Öffnungs-Position bei Beginn eines Druckabfalls des Fülldrucks detektiert wird. Das heißt, dass wenn die offene Seite der Form beginnt, sich mit der Auslassöffnung 4 zu überschneiden, ein Druckabfall stattfindet, was eindeutig der Form-Öffnungs-Position dieser entsprechenden Form zugeordnet werden kann. Die entsprechende Position der Dreheinrichtung kann dann in der Steuerung abgelegt werden. Die Form-Schließ-Position kann dann detektiert werden, wenn der gemessene Fülldruck wieder zu steigen beginnt. Somit können die entsprechenden Positionen auf einfache Art und Weise bestimmt werden, und zwar unabhängig von der Geschwindigkeit der umlaufenden Formen und unabhängig von der Formgröße und Geometrie.

Zur Ermittelung des Volumens der n-Formen werden die jeweiligen Formen befüllt, wobei detektiert wird, dass die Form voll ist, wenn ein Druckanstieg des Fülldrucks beginnt, wobei ermittelt wird, welches Volumen von der Fördereinrichtung in der Zeit von der Form-Öffnungs-Position bis zum Druckanstieg ausgestoßen wurde. Dabei wird die Förderleistung der Fülleinrichtung so hoch eingestellt, dass der Druckanstieg durch das eingefüllte Lebensmittel erfolgt, und nicht durch das Verschließen der Form durch beispielsweise die Abdeckung. Das zu fördernde Volumen ist abhängig vom Luftgehalt des Füllguts. Bei hohem Luftanteil muss mehr Volumen gefördert werden, um gegen Ende der Füllphase den gewünschten Druck zu erzeugen, als bei geringerem Luftanteil. Dadurch, dass das Volumen in einem Lernmodus bestimmt wird und nicht lediglich ausgerechnet wird, kann der Einschluss des Luftanteils im Totvolumen zwischen Förderwerk und zu befüllender Kammer kompensiert werden. Eventuell auftretende Leckage in Förderwerk oder Formtrommel wird kompensiert.

Vor dem Abfüllbeginn, d.h. der eigentlichen Produktion, wird auch die Umlaufgeschwindigkeit der n-Formen bestimmt, wobei aus der Form-Öffnungs-Position, der Form-Schließ-Position, sowie der Umlaufgeschwindigkeit für jede Form die gesamte Füllzeit berechnet wird und die Dauer des ersten Füllzeitabschnitts $t_1$ und des zweiten Füllzeitabschnitts $t_2$ sowie der Anteil des Füllvolumens während des ersten Füllzeitabschnitts $t_1$ und der Anteil des Füllvolumens während des zweiten Füllzeitabschnitts $t_2$ bestimmt wird.

Vorzugsweise beträgt der Füllzeitabschnitt $t_1$ 70 bis 98 %, insbesondere 85 bis 86 % der gesamten Füllzeit $(t_1+t_2)$. Vorzugsweise wird während des ersten Füllzeitabschnitts 70 bis 98 %, insbesondere 90 bis 96 % des Füllvolumens abgefüllt.

Gemäß der vorliegenden Erfindung wird das gesamte Füllvolumen, das für eine entsprechende Form bestimmt wurde, in die Form eingefüllt und mit eingestelltem Druck beaufschlagt, bevor die Form wieder in der Form-Schließ-Position angeordnet ist. Dies ermöglicht eine exakte Portionierung.

Eine Form kann mehrere in einer Reihe nebeneinander angeordnete Formkammern 1a,b,c,d umfassen. Diese Formkammern können auch eine unterschiedliche Geometrie, d.h. auch unterschiedliche Volumina, aufweisen. Die Formkammern können in ihrer Ausrichtung auch unterschiedlich angeordnet sein bzw. eine Form kann auch zwei dicht aneinander grenzende oder ineinander verschachtelte Unterreihen umfassen, die eine Form darstellen und gemeinsam und gleichzeitig von einer Zuführeinrichtung über deren Auslassöffnung befüllt werden. Die Zuführeinrichtung bildet dabei beim Befüllen einen dichten Abschluss mit einer Fläche um diese Form herum wobei es einen Druckausgleich zwischen den einzelnen Formkammern gibt.

Bei einer Vorrichtung gemäß der vorliegenden Erfindung ist die Breite der Zufuhröffnung (Breite in Bewegungsrichtung der Formen betrachtet) kleiner als der Abstand zwischen zwei Formen bzw. Formreihen in Umfangsrichtung. Dies ermöglicht, dass die Parameter, wie Form-Öffnungs-Position, Form-Schließ-Position und Füllvolumen ausreichend genau bestimmt werden können, da es dazu notwendig ist, dass Druck in der Zuführeinrichtung, d.h. der Zuführleitung, aufgebaut werden kann, so dass sich ein nächstes Behältnis nicht öffnet, bevor das vorherige Behältnis voll verschlossen ist. Ansonsten wäre keine Druckbefüllung der Behältnisse möglich. Diese Anordnung ermöglicht jedoch eine hohe Gewichtsgenauigkeit.

Die vorliegende Erfindung wird nachfolgend unter Bezugnahme der folgenden Figuren näher erläutert.

Fig. 1          zeigt einen schematischen Schnitt durch eine Vorrichtung zum Herstellen von geformten Lebensmitteln gemäß der vorliegenden Erfindung.

Fig. 2          zeigt einen Schnitt durch eine Vorrichtung gemäß der vorliegenden Erfindung in perspektivischer Darstellung.

Fig. 3          zeigt einen Schnitt durch eine Formtrommel in perspektivischer Darstellung mit Formen, die eine unterschiedliche Geometrie aufweisen.

Fig. 4          zeigt eine Aufsicht auf die Mantelfläche einer Formtrommel gemäß der vorliegenden Erfindung sowie eine Auflistung der entsprechenden Volumina und Abfüllpositionen.

Fig. 5          zeigt grob schematisch einen Schnitt durch eine Vorrichtung gemäß einem weiteren Ausführungsbeispiel der vorliegenden Erfindung mit einem Formband.

Fig. 6          zeigt die Aufsicht auf den Mantel des Formbandes sowie eine Tabelle, die die Volumina der Formen in den einzelnen Reihen sowie die Positionen angibt.

Fig. 7a, 7b, 7c          sind schematische Darstellungen die das Erkennen der Kammer-ÖffnungsPosition verdeutlichen.

Fig. 8a, 8b, 8c          sind schematische Darstellungen, die das Erkennen der Form-SchließPositionen verdeutlichen.

Fig. 9a, 9b, 9c          sind schematische Darstellungen, die das Ermitteln der Formvolumina verdeutlichen.

Fig. 10a, 10b, 10c     sind schematische Darstellungen, die den Produktionsablauf zum Befüllen einer Form verdeutlichen.

Fig. 11                  ist eine Vorrichtung gemäß einem weiteren Ausführungsbeispiel gemäß der vorliegenden Erfindung.

Fig 12                   zeigt schematisch eine Anordnung von Formen gemäß einem Ausführungsbeispiel der vorliegenden Erfindung.

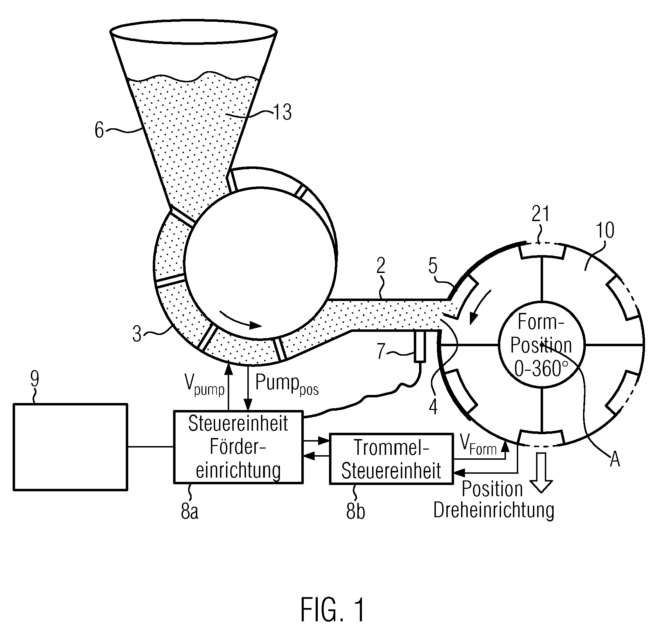

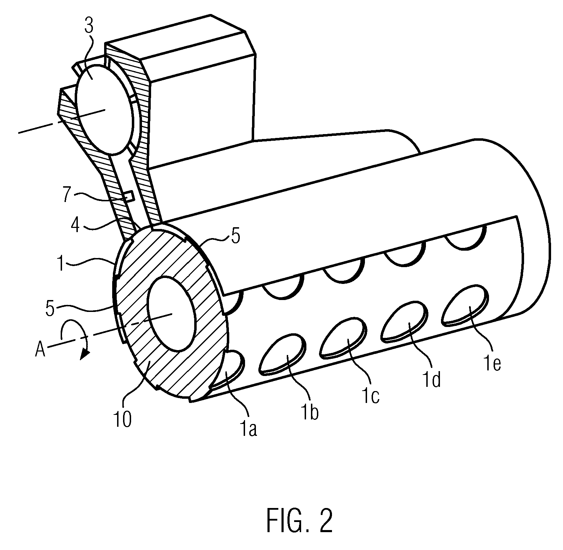

Fig. 1 zeigt eine Vorrichtung zum Herstellen von geformten Lebensmitteln, wie etwa Chicken Nuggets, Formschnitzel etc. in schematischer Darstellung. Die Vorrichtung umfasst hier einen Fülltrichter 6, in den die Lebensmittelmasse 13 eingefüllt werden kann. An den Trichter schließt sich eine Fördereinrichtung 3, d.h. ein Förderwerk, beispielsweise in Form einer Flügelzellenpumpe, an. Es sind jedoch auch andere Pumpenformen, wie beispielsweise Schneckenförderpumpe oder Kolbenförderwerk möglich. An die Fördereinrichtung 3 schließt sich die Zufuhreinrichtung 2, hier in Form eines Zuführrohrs, an. Die Zuführeinrichtung 2 weist eine Auslassöffnung 4 auf, über die die Lebensmittelmasse 13 in Formen 1 abgefüllt werden kann. Es sind n-hintereinander umlaufende Formen 1, in Fig. 1 sechs umlaufende Formen 1, vorgesehen (n ∈ N). Die Formen sind in diesem Fall aus Aussparungen in der Oberfläche einer Dreheinrichtung, hier der Formtrommel 10 ausgebildet, und weisen eine nach außen gewandte offene Seite 21 auf, wie insbesondere auch durch die perspektivische Darstellung in Fig. 2 deutlich wird. Die Formen 1 können auch mehrere in einer Reihe angeordnete Formkammern 1a,b,c,d umfassen, wobei dann die Formkammern einer Reihe die Form 1 bilden. Die Formen können Luftkanäle aufweisen oder aus luftdurchlässigem Sintermaterial gebildet sein. Die Trommel 10 ist drehbar um eine Achse A gelagert und wird von einer Antriebswelle mit einer Geschwindigkeit $V_{Form}$, wie durch den Pfeil dargestellt ist, während des Abfüllens gedreht. Die Formen 1 werden umlaufend an der Auslassöffnung 4 der Zuführeinrichtung vorbeigeführt und vor und nach dem Befüllen über eine mit der Zuführeinrichtung bzw. dem Zufuhrrohr 2 verbundenen Abdeckung 5 dicht verschlossen. Die Abdeckung 5 ist konzentrisch zu der Trommel 10 angeordnet, wobei die Trommeloberfläche die Innenseite der Abdeckung 5 berührt. Das bedeutet, dass die Formen, die sich auf der Umlaufbahn an der Auslassöffnung 4 der Zuführeinrichtung 2 vorbeibewegen, erst verschlossen sind, sich dann an einer Form-Öffnungs-Position zur Auslassöffnung 4 hin öffnen, durch die Öffnung 4 gefüllt werden, an der Auslassöffnung 4 vorbeilaufen und an einer Form-Schließ-Position wieder durch die Abdeckung 5 verschlossen werden.

Die Vorrichtung weist weiter einen Drucksensor 7 auf, der hier in der Zuführeinrichtung, insbesondere dem Zuführrohr 2, angeordnet ist. Der Drucksensor 7 könnte jedoch auch im Endbereich der Fördereinrichtung 3 angeordnet sein. Über diesen Drucksensor 7 kann der Fülldruck $P_{Füll}$ überwacht werden. Die Vorrichtung weist weiter eine Steuereinrichtung 8 auf, die eine Steuereinheit 8b für die Dreheinrichtung 10, insbesondere Trommelsteuereinheit, aufweist, die die Trommel bzw. den entsprechenden Antrieb ansteuert. Ferner weist die Steuerung eine Steuereinheit 8a auf für die Fördereinrichtung. Die Steuereinheit 8a und 8b können auch in einer einzelnen Steuerung integriert sein. Die Steuereinheit 8a gibt beispielsweise Signale an den Antrieb der Fördereinrichtung 3 derart, dass die Geschwindigkeit $V_{Pump}$ der Fördereinrichtung entsprechend gesteuert oder geregelt werden kann. Die Fördereinrichtung wird mit einem geregelten Servomotor angetrieben. Somit verfügt dieser Antrieb über eine Positionserkennung und die Steuereinheit 8a erhält von der Fördereinrichtung 3 kontinuierlich Signale bezüglich der Motorposition und damit auch bezüglich der Pumpenposition. Ferner ist die Steuereinheit 8a mit dem Drucksensor 7 verbunden. Außerdem erhält die Steuereinheit 8a Signale von der Steuereinheit 8b bezüglich der Formgeschwindigkeit bzw. der Umlaufgeschwindigkeit der Dreheinrichtung 10. Die Steuerung 8b steuert dann den entsprechenden Antrieb an. Andererseits wird die tatsächliche Stellung der Dreheinrichtung 10, hier der Trommel mit den Formen 1, d.h. beispielsweise eine Winkelposition, erfasst. Diese Position wird beispielsweise über einen Drehgeber oder Positionsschalter erfasst und dann weiter an die Steuereinheit 8b und von dort an die Steuereinheit 8a übertragen. Es ist jedoch auch möglich, dass die Dreheinrichtung 10 durch einen Motorregler in der Steuereinheit für die Fördereinrichtung 8a bewegt wird. Schließlich weist die Vorrichtung noch eine Display- und Eingabeeinrichtung 9 auf.

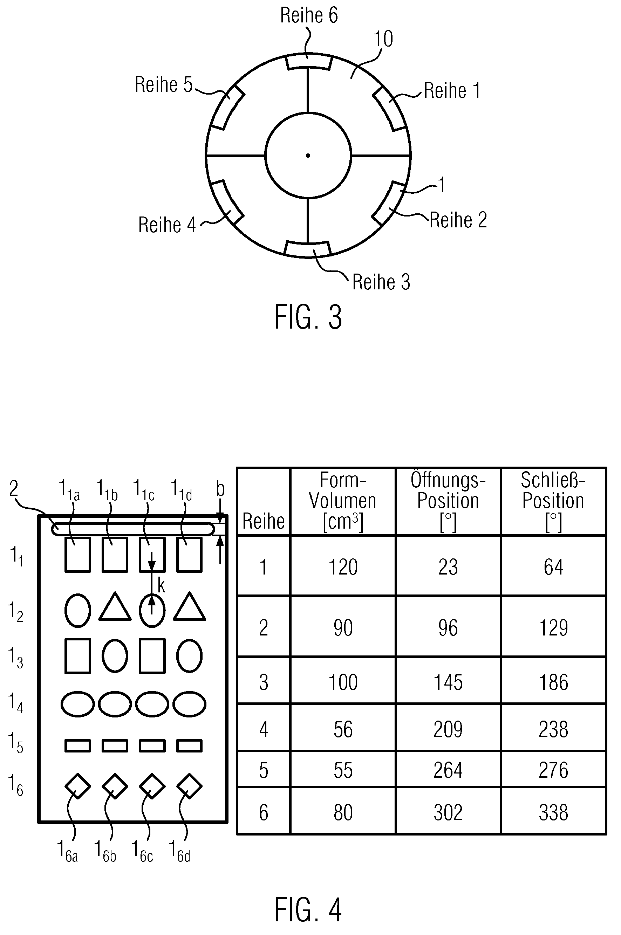

Fig. 3 zeigt einen Querschnitt durch eine Formtrommel in perspektivischer Darstellung, die Formen 1 mit unterschiedlicher Geometrie bzw. unterschiedlichen Querschnitten aufweist.

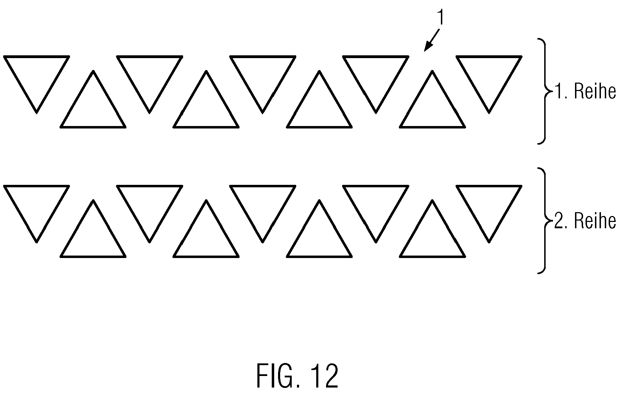

Fig. 4 zeigt eine Mantelaufsicht auf die Formtrommeloberfläche. In diesem Ausführungsbeispiel weist die Vorrichtung 6 Formen 1 auf, wobei wiederum jede Form 1 sich zusammensetzt aus mehreren Formkammern $1_{1a}$, $1_{1b}$, $1_{1c}$, $1_{1d}$ bis $1_{6a}$, $1_{6b}$, $1_{6c}$, $1_{6d}$. Das heißt, jede Formreihe umfasst hier wiederum vier einzelne Formkammern. Die Reihen sind so auf der Oberfläche angeordnet, dass sie auf der Oberfläche eine bestimmte Abfüllposition bzw. eine bestimmte Öffnungs- oder Schließ-Position aufweisen, die einer bestimmten Drehposition der Dreheinrichtung bzw. deren Antrieb entsprechen. Diese Öffnungs- und Schließ-Positionen sind in der Steuerung eingespeichert. Auch das Formvolumen, d.h. das Volumen aller einzelnen Formkammern in einer Reihe, ist für jede Reihe in der Steuerung abgespeichert. Dabei können die Formen in den unterschiedlichen Reihen eine unterschiedliche Geometrie und ein unterschiedliches Volumen aufweisen. Auch die einzelnen Formkammern innerhalb einer Reihe können, wie insbesondere aus Reihe 2 hervorgeht, unterschiedliche Geometrien und Volumina aufweisen. Dabei ist nicht ausgeschlossen, dass zwei dicht aufeinander folgende Unterreihen von Formkammern beim Befüllen zu einer Reihe zusammengefasst werden, wie insbesondere aus Fig. 12 hervorgeht. Hier sind die Formkammern der Unterreihen ineinander verschachtelt. Die Formkammern werden gleichzeitig durch die Zuführeinrichtung befüllt.

Die Zuführeinrichtung, d.h. das Zuführrohr, hat dabei eine entsprechend große Auslassöffnung 4, deren Länge größer ist als die Länge einer Reihe, so dass die Zuführeinrichtung 2 mit der Oberfläche der Dreheinrichtung, hier der Trommel 10 einen dichten Abschluss bilden kann. Die Breite b der Auslassöffnung 4 ist kleiner als der Abstand k zwischen zwei Reihen, damit sich zwischen den Reihen Druck in der Zuführeinrichtung 2 aufbauen kann, was insbesondere, wie nachfolgend erläutert wird, zum Detektieren der Öffnungs- und Schließ-Position bzw. des Kammervolumens wesentlich ist.

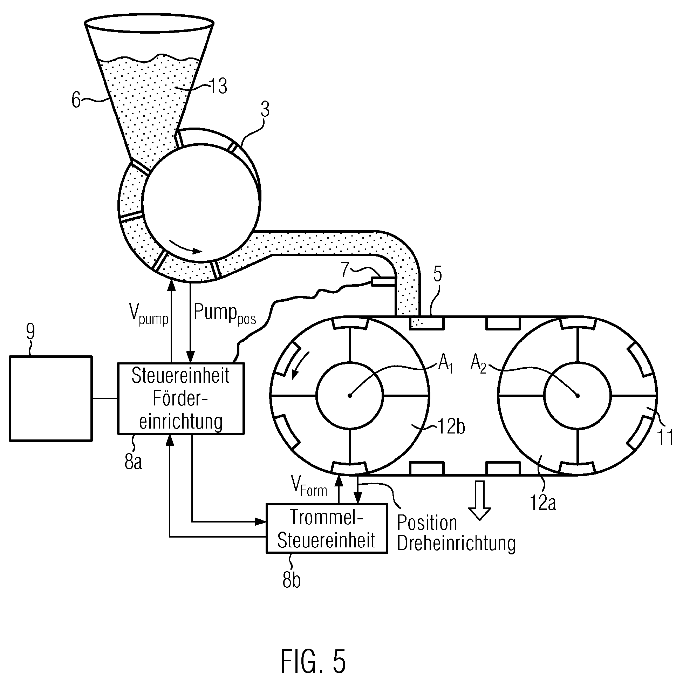

Fig. 5 zeigt ein weiteres Ausführungsbeispiel gemäß der vorliegenden Erfindung, das dem in Fig. 1 gezeigten Ausführungsbeispiel entspricht, mit der Ausnahme, dass als Dreheinrichtung statt einer Formtrommel 10 ein umlaufendes Formband 11 vorgesehen ist, das um zwei Achsen $A_1$, $A_2$ bzw. zwei Rollen 12a, 12b, von denen eine eine Antriebsrolle ist, umläuft. Das Formband 11 kann z. B. doppelt so lang sein wie der Umfang der Antriebsrolle. Die Formen 1 sind in der Oberfläche des Formbands 11 ausgebildet. Das Formband kann beispielsweise aus Kunststoff, vorzugsweise aus einem thermoplastischen Kunststoff ausgebildet sein. Nach zwei Umdrehungen der Antriebsrolle (720°) wiederholen sich die Formen. Hier gibt es nun insgesamt zwölf Formreihen, die jeweils vier Formkammern umfassen. Auch hier zeigt die Tabelle die Formvolumen der einzelnen Reihen sowie die Öffnungs- und Schließ-Positionen der einzelnen Formen in den jeweiligen Reihen. Ansonsten entspricht das Ausführungsbeispiel dem in Zusammenhang mit Fig. 1 gezeigten Ausführungsbeispiel.

Die Information des Volumens und der Öffnungs- und Schließ-Position ist für den Betrieb der Vorrichtung wesentlich. Entsprechende Informationen werden vor dem eigentlichen Prozess, d.h. vor dem Abfüllbeginn, bestimmt und in der Steuerung in einem Speicher abgelegt.

Grundsätzlich können entsprechende Daten durch Berechnen und Abmessen, ermittelt werden.

Ganz besonders vorteilhaft ist es jedoch, wenn gemäß der vorliegenden Erfindung diese Parameter vor dem eigentlichen Abfüllvorgang in einem Lernmodus erfasst werden, d.h. ein adaptiv lernendes System verwendet wird. Das bedeutet auch, dass Dreheinrichtungen, beispielsweise Formbänder oder Trommeln, beliebig veränderbar und austauschbar sind, und das System selbst das Verfahren entsprechend neu anpasst.

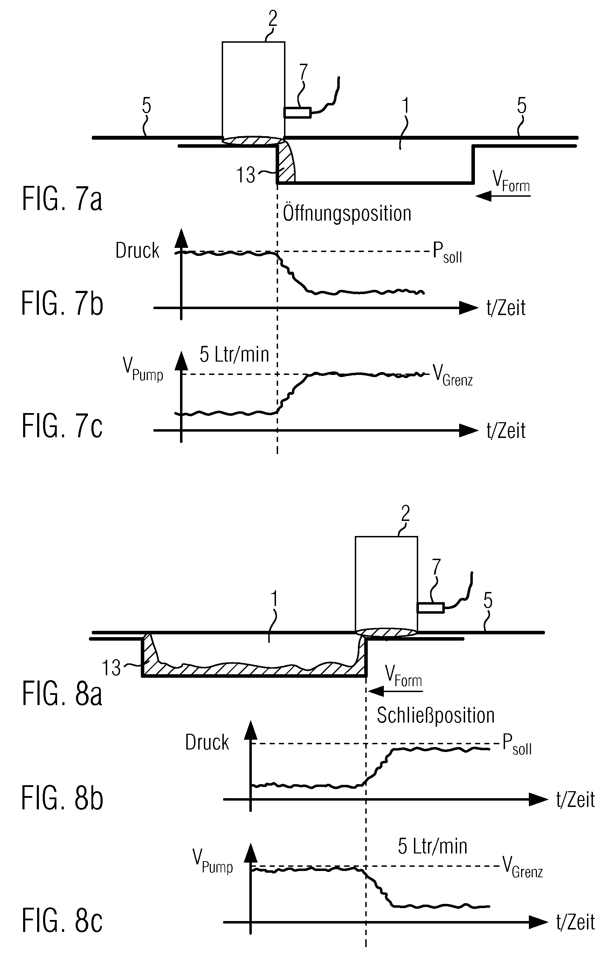

In den Fig. 7a-7c wird verdeutlicht, wie die Öffnungs-Position einer Form bzw. einer Formreihe bestimmt werden kann. Fig. 7a zeigt einen Längsschnitt durch den wesentlichen Abschnitt der Vorrichtung. Zum Erkennen der Öffnungs-Position wird die Fördereinrichtung 3 im Druckregelmodus betrieben, d.h. der Fülldruck in der Zuführeinrichtung 2 wird auf einen bestimmten Soll-Wert $P_{Soll}$ geregelt. Dabei wird der über den Sensor 7 erfasste Ist-Wert des Fülldrucks mit dem Soll-Wert verglichen und die Fördereinrichtung 3 entsprechend angesteuert, derart, dass sich eine bestimmte Leistung bzw. Geschwindigkeit $V_{Pump}$ ergibt. Dabei ist eine bestimmte Grenzgeschwindigkeit z.B. von 5 l/min eingestellt. Wie aus Fig. 7a hervorgeht, bewegt sich die Form 1, beispielsweise Form 1 in Reihe 1, wie in den vorherigen Abbildungen gezeigt, in Pfeilrichtung unter Zuführeinrichtung 2 bzw. unter der Abdeckung 5. Vor dem Abfüllen wird die Öffnung 21 der Form 1 durch die Abdeckung 5 verschlossen. Sobald die Form 1 in die Öffnungs-Position kommt, überschneiden sich dabei die Auslassöffnung 4 und die Öffnung 21 der Form 1 und Lebensmittelmasse 13 kann in die Form 1 eintreten, was zu einem Druckabfall in der Zuführeinrichtung 2 führt, was insbesondere aus Fig. 7b hervorgeht. Bevor die Form 1 in die Öffnungs-Position kommt, wird die Auslassöffnung 4 von der Oberfläche, beispielsweise der Trommel oder des Formbandes, abgedichtet, derart, dass sich der Soll-Druck aufbauen kann. Bei Beginn des Abfalls des Drucks wird die Öffnungs-Position festgelegt. Ein Druckabfall wird z.B. dann erkannt, wenn der Druck unter einen bestimmten Schwellwert abfällt z.B. um mindestens 0,2 bar bis 1,5 bar des eingestellten Soll-Werts $P_{Soll}$. Gleichzeitig wird, nachdem der Ist-Wert des Fülldrucks vom Soll-Wert des Fülldrucks $P_{Soll}$ abweicht, die Förderleistung, d.h. hier die Fördergeschwindigkeit, auf eine Grenzgeschwindigkeit angehoben, beispielsweise in einem Bereich von 1 bis 10 l/min, hier 5 l/min.

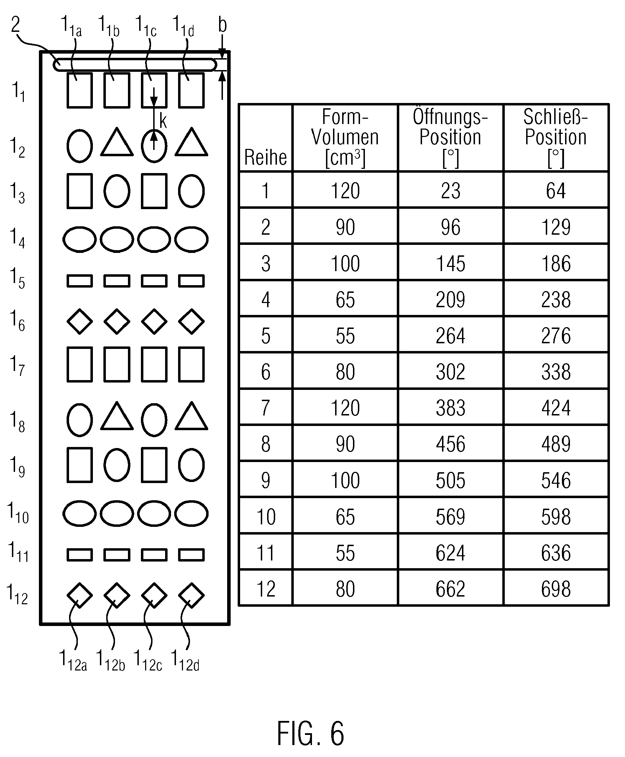

Wenn die Öffnungs-Position detektiert wird, wird dazu eine entsprechende Stellung der Dreheinrichtung 10, beispielsweise Winkelposition [Grad] des entsprechenden Antriebs, erfasst und abgespeichert (siehe hierzu auch Fig. 4 und 6).

Die Fig. 8a, 8b, 8c zeigen ein Verfahren zum Erkennen der Form-Schließ-Position. Die Form 1 wird nach Passieren der Öffnungs-Position (Fig. 7a) in Pfeilrichtung weiterbewegt und über die Zuführeinrichtung 2 befüllt. Auch hier wird die Fördereinrichtung im Druckregelmodus betrieben und regelt den Druck in der Zufuhreinrichtung 2 auf einen bestimmten Soll-Druck $P_{Soll}$ z.B. auf 1 bar, wie zuvor beschrieben. Die Leistung der Fördereinrichtung ist relativ niedrig, d.h. eine Grenzgeschwindigkeit der Fördereinrichtung 3 wird so niedrig eingestellt, dass die Form im Lernmodus nicht voll wird. Zwischen den einzelnen Kammern der jeweiligen Form der Reihe kann ein Druckausgleich stattfinden. Eine entsprechende Geschwindigkeit der Fördereinrichtung kann in Abhängigkeit der Geschwindigkeit der Form $V_{Form}$ und dem abgeschätzten oder bekannten Volumen der Formöffnung abgeschätzt werden. Wie aus Fig. 8b hervorgeht, liegt der Ist-Wert für den Druck während des Befüllens somit deutlich unter dem Soll-Wert $P_{Soll}$, beispielsweise bei 0,5 bar, und die Fördereinrichtung 3 wird daher bei der maximal eingestellten Grenzgeschwindigkeit $V_{Grenz}$ betrieben. Der Beginn eines Druckanstiegs über einen bestimmten Schwellwert, in diesem Beispiel auf 1 bar, signalisiert das Schließen der Kammer. Diese erkannte Schließ-Position kann wieder, wie zuvor beschrieben, einer bestimmten Position des Antriebs, d.h. einer bestimmten Winkelposition [Grad], zugeordnet und abgespeichert werden. Das in Zusammenhang mit Fig. 7 und 8 gezeigte Verfahren wird wiederholt, bis alle Formpositionen am Umfang der Trommel 10 oder des Formbandes 11 bzw. des umlaufenden Mittels, das die Formen 1 aufweist, bekannt sind. Aufgrund der zyklisch wiederkehrenden Formpositionen sind nun alle Öffnungs- und Schließ-Positionen der nachfolgenden n-Formen bzw. Formreihen bekannt.

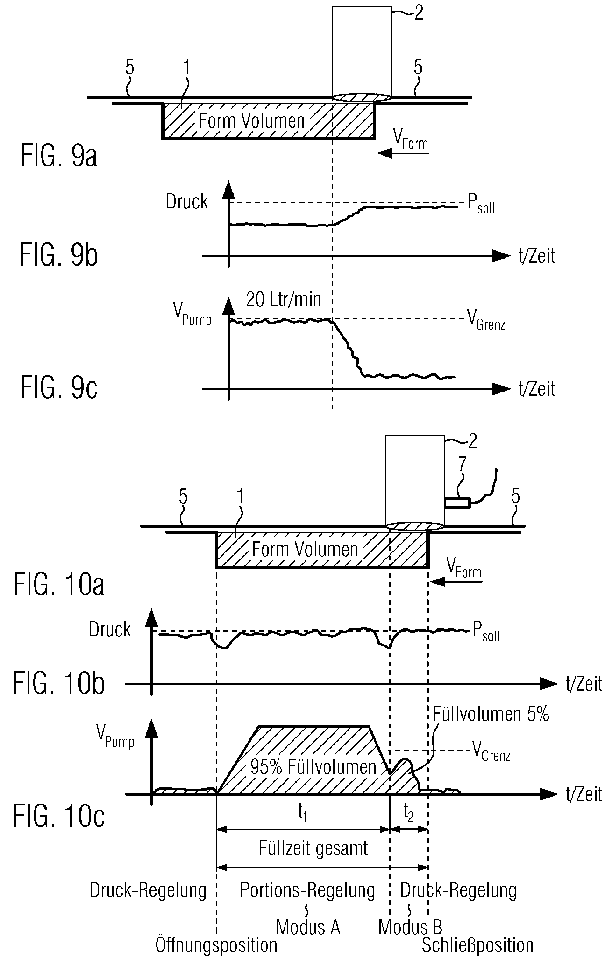

In Zusammenhang mit den Fig. 9a,b,c wird näher erläutert, wie die Kammervolumina der einzelnen Formen ermittelt werden. Die Kammervolumenermittlung kann nach der Ermittlung der Öffnungs- und Schließ-Positionen erfolgen. Wieder wird die Fördereinrichtung im Druckregelmodus mit einem bestimmten Soll-Wert $P_{Soll}$, z.B. 1 bar, betrieben. Dabei wird jedoch ein höheres Fülltempo als in Zusammenhang mit dem vorherigen Verfahren zum Bestimmen der Öffnungs- und Schließ-Positionen gewählt. Das Fülltempo soll so hoch sein, dass die Form 1, die sich mit der Geschwindigkeit $V_{Form}$ bewegt, bereits vollständig gefüllt ist, bevor die Form wieder über die Abdeckung 5 geschlossen wird. Hier beträgt beispielsweise das Fülltempo 20 l/min. Diese Geschwindigkeit wird als Grenzgeschwindigkeit $V_{Grenz}$ eingegeben. Wenn die Form voll ist, steigt auch, wie insbesondere aus Fig. 9b hervorgeht, der Fülldruck $P_{Füll}$ an und zwar bis auf den Grenzwert $P_{Soll}$, worauf die Fördereinrichtung 3 stehenbleibt. Der Druckanstieg erfolgt aufgrund einer vollen Kammer und nicht aufgrund des Verschließens der Kammer. Es wird angenommen, dass bei Beginn des Ansteigens des Drucks die Kammer voll ist. Ein Ansteigen des Drucks wird dann detektiert, wenn der Druck auf einen bestimmten Schwellwert z.B. um mehr als 0,5 bar ansteigt. Es wird ermittelt, welches Volumen von der Fördereinrichtung 3 in der Zeit von der Form-Öffnungs-Position bis zum Druckanstieg ausgestoßen wurde. Dieses Volumen kann leicht ermittelt werden, da sowohl die entsprechende Zeit als auch die Fördergeschwindigkeit bzw. Leistung bekannt ist. Das Fördervolumen wird für die entsprechenden Kammern in der Steuerung gespeichert (siehe hierzu auch z.B. Fig. 4 und 6). Auf diese Art und Weise können auch Formen mit unterschiedlichen Volumina einfach erfasst werden.

Wie aus Fig. 9c hervorgeht, wird entsprechend der Druckregelung die Pumpleistung bzw. Pumpgeschwindigkeit reduziert, sobald der Druck ansteigt.

Als Ergebnis aus dem Lernmodus, wie er in Fig. 7 bis 9 gezeigt ist, ist nun für die Formen in den n-Reihen, bei diesem Ausführungsbeispiel Reihen 1 bis 6, sowohl die Öffnungs-Position als auch die Schließ-Position und die entsprechenden Volumina bekannt.

Nun wird das Portionierprofil für jede Form berechnet. Die Umlaufgeschwindigkeit der Dreheinrichtung $V_{Form}$ wird auf ein Produktionstempo, z.B. 10 Umdrehungen/min. eingestellt. Da nun von jeder Form das Volumen sowie die Öffnungs- und Schließ-Position bekannt ist, kann die Steuerung 8 ein optimales Portionierprofil berechnen. Zunächst wird die gesamte Füllzeit vom Zeitpunkt des Öffnens bis zum Zeitpunkt des Schließens berechnet.

$$\text{Füllzeit gesamt [s]} = \text{"geschlossene Position" [Grad]} - \text{geöffnete Position [Grad]}/V_{Form} \text{ [Grad/s]}$$

"Geschlossene Position minus geöffnete Position" entspricht der Strecke, den die Form zwischen den Positionen zurücklegt, d.h. der Innenlänge der Form plus Länge der Zuführöffnung 4.

Gemäß der vorliegenden Erfindung wird das Portionieren in zwei Abschnitte unterteilt, nämlich den Zeitabschnitt $t_1$ und den Zeitabschnitt $t_2$. Der Zeitabschnitt $t_1$ ist größer als der Zeitabschnitt $t_2$ und beträgt etwa 70 bis 98 % der Gesamt-Befüllzeit $t_{Gesamt}$. Während dieses ersten Zeitabschnitts $t_1$ wird ein Großteil der Lebensmittelmasse abgefüllt, insbesondere 70 bis 98 %, hier 95 %.

$$\text{Portionszeit } t_1 = t_{Gesamt} \times 90 \, \%.$$

$$\text{Portionsvolumen} = \text{bestimmtes Füllvolumen} \times 95 \, \%.$$

Während des Füllzeitabschnitts $t_1$ wird die Fördereinrichtung 3 in einem ersten Modus A angesteuert, derart,

7

dass der vorbestimmte Anteil, hier 95 %, des Füllvolumens der jeweiligen Form abgefüllt wird. Dabei kann die Fördereinrichtung 3 mit relativ hoher Leistung angetrieben werden. Eine Überdruckabschaltung der Fördereinrichtung erfolgt sicherheitshalber bei z.B. 5-10 bar , z.B. für den Fall, dass die Kammer nicht entleert wurde. Die Geschwindigkeit $v_{Pump}$ der Fördereinrichtung ergibt sich aus der Profil-Berechnung von Portionsvolumen und Portionszeit $t_1$. Bevor die Form 1 in die Öffnungsposition läuft, findet eine Druckregelung statt, wobei der Druck auf einen Druck $P_{Soll}$, z.B. 1 bar, eingestellt wird. Da der Abstand zwischen einzelnen Reihen k, wie zuvor beschrieben, größer ist als die Breite der Auslassöffnung 4, kann sich vor der Öffnungsposition der Druck $P_{Soll}$, wie durch Fig. 10b klar wird, aufbauen. Die Leistung der Fördereinrichtung bzw. deren Geschwindigkeit wird daher heruntergeregelt und ist somit sehr klein oder 0. Die Steuereinrichtung 8 empfängt laufend Signale, in welcher Position sich die Dreheinrichtung, z.B. der Antrieb der Formen 1 befindet, d.h. in welchem Winkelbereich. Diese Signale werden beispielsweise über einen Drehgeber oder einen Positionsschalter erfasst. Bestimmt nun die Steuereinrichtung, dass die aktuelle Position beispielsweise des Antriebs bzw. der Trommel 10 oder des Formbands 11 oder eines Drehtellers 14 mit einer Öffnungsposition einer bestimmten Form übereinstimmt, so schaltet die Steuerung von Druckregelung auf Portionsregelung um und steigert die Füllleistung, d.h. die Füllgeschwindigkeit $V_{Pump}$ auf einen Wert, der größer ist als die Förderleistung bzw. Fördergeschwindigkeit $V_{Grenz}$ im Druckregelmodus und sich aus der Profil-Berechnung von Portionsvolumen und Portionszeit $t_1$ ergibt. Somit werden in dem ersten Füllzeitabschnitt $t_1$ 95 % des Füllvolumens abgefüllt. Am Ende des Füllzeitabschnitts $t_1$ wird die Fördereinrichtungsleistung bzw. die Geschwindigkeit $V_{Pump}$ abgesenkt, hier auf einen Wert, der unterhalb der Grenzgeschwindigkeit $V_{Grenz}$ liegt. Nun ist der Modus A, d.h. die Portionsregelung, beendet und die Steuerung schaltet wieder um auf Druckregelung, wobei auch hier wieder ein bestimmter Soll-Wert $P_{Soll}$ eingestellt wird, der dem Fülldruck, mit dem die Form am Ende der Befüllung beaufschlagt werden soll, entspricht. Diese Druckregelung entsprechend Modus B findet während des zweiten Füllzeitabschnitts $t_2$ statt, wobei hier der Rest des Volumens abgefüllt wird, hier die restlichen 5 %. Ist der Soll-Druck $P_{Soll}$ erreicht, so wird, wie aus Fig. 10c hervorgeht, die Leistung der Fördereinrichtung bzw. die Geschwindigkeit $V_{Pump}$ reduziert bzw. die Pumpe angehalten, wobei der Druck während der Füllzeit $t_2$ auf $P_{Soll}$ gehalten wird. Wichtig ist, dass bevor die Form wieder vollständig geschlossen wird, diese vollständig mit dem gesamten vorab bestimmten Füllvolumen gefüllt ist und mit dem eingestellten Druck $P_{Soll}$ beaufschlagt ist. Das tatsächlich abgefüllte Volumen ergibt sich aus dem Volumen der mit konstantem Druck befüllten Kammer. Somit ist eine sehr hohe Portioniergenauigkeit möglich, ohne dass es zu Druckspitzen oder zu einer Beschädigung des Behälters kommt. Auf diese Art und Weise werden die hintereinander angeordneten umlaufenden Formen bzw. Formreihen gefüllt. Wie aus der vorhergehenden Beschreibung deutlich wurde, vereinfacht der Lernmodus das Einstellen der Vorrichtung wesentlich. Fehleinstellungen können verhindert werden. Bei Änderung der Geschwindigkeit der Formen bzw. der Dreheinrichtung (Trommelgeschwindigkeit, Formbandgeschwindigkeit) ist keine manuelle Anpassung erforderlich. Die Positionserkennung mittels Drucksensor funktioniert auch bei unterschiedlichen Formformen innerhalb einer Trommel bzw. innerhalb eines Formbandes.

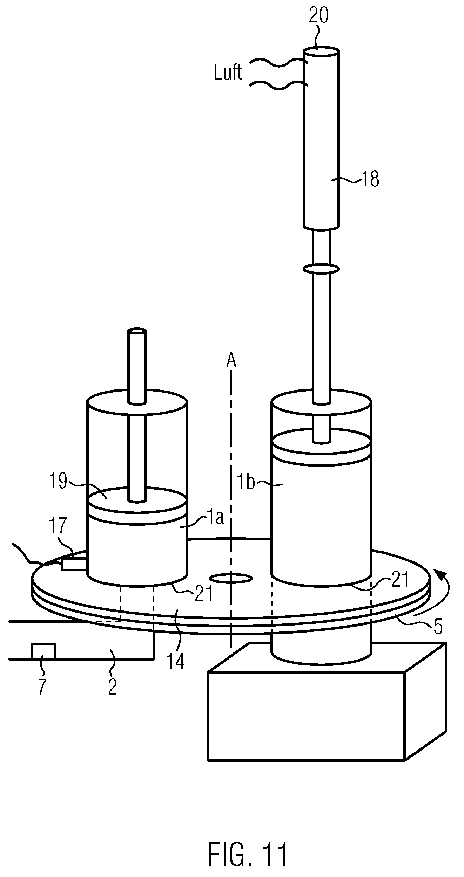

Fig. 11 zeigt eine weitere Ausführungsform gemäß der vorliegenden Erfindung. Diese Vorrichtung weist eine Fördereinrichtung 3 (nicht dargestellt) mit einer Zuführeinrichtung 2 und einer entsprechenden Steuerung auf, die den entsprechenden Elementen, wie sie im Zusammenhang mit den vorherigen Ausführungsbeispielen beschrieben wurden, entsprechen. Statt der sich drehenden Trommel bzw. des umlaufenden Formbandes 11 ist hier als Dreheinrichtung ein drehbarer Teller 14, der sich um die Achse A in Pfeilrichtung mit Hilfe eines entsprechenden Antriebs dreht, vorgesehen. Auf dem Teller sind Formen 1 angeordnet, deren Öffnung nach unten freigelegt ist. Der Drehteller 14 weist dazu einen entsprechenden Ausschnitt auf. In den Formen 1 sind entsprechende Portionierkolben 19 vorgesehen, die in dem Zylinder auf und ab bewegbar sind. Ferner ist ein Positionsschalter 17 vorgesehen, der die Lage des Drehtellers 14 erfasst. Auch hier gibt es n-hintereinander umlaufende Formen 1. Bei dem in Fig. 11 gezeigten Ausführungsbeispiel sind es zwei Formen. Mit der Zuführeinrichtung ist wie auch bei den vorhergehenden Ausführungsbeispielen eine Abdeckung 5 verbunden, die hier auch als Scheibe ausgebildet ist und eine Aussparung im Bereich der Einlassöffnung 4 der Zuführeinrichtung aufweist und darüber hinaus eine Ausstoßöffnung, durch die das Produkt aus dem Zylinder gestoßen werden kann,

Das Verfahren läuft wie folgt ab. Der Drehteller 14 wird über einen Antrieb (z.B. pneumatisch oder elektrisch) in die Füllposition gedreht, in der die Auslassöffnung 4 der Zuführeinrichtung 2 der Öffnung 21 der Form 1 gegenüberliegt. Der Positionsschalter 17 erkennt dabei die Position der Dreheinrichtung, hier des Tellers. Anschließend wird die Form 1 über die Zuführeinrichtung 2 während eines ersten Füllzeitabschnitts $t_1$ befüllt, wobei die Fördereinrichtung 3 derart angesteuert wird, dass ein vorbestimmter Anteil des Füllvolumens der entsprechenden Form abgefüllt wird (Füllmodus A), wobei hier keine Druckregelung durchgeführt wird. Anschließend erfolgt während eines zweiten Füllzeitabschnitts $t_2$ das Befüllen der Form 1 mit dem restlichen Anteil des Füllvolumens der entsprechenden Form in einem zweiten Füllmodus B, in dem die Fördereinrichtung 3 in Abhängigkeit des Fülldrucks $P_{Füll}$ angesteuert wird, derart, dass sich ein vorbestimmter Fülldruck in der Form 1 einstellt, wie in Zusammenhang mit den vorherigen Ausführungsbeispielen beschrieben wurde und in Fig. 10c gezeigt ist. Durch die einströmende Füllgutmasse wird der Portionierkolben nach oben gedrückt. Zeitgleich befindet sich eine weitere Form 1 in der Ausstoßposition, wobei zeitgleich zur Befüllung ein Ausstoßzylinder 18 das Füllgut über den Portionierkolben ausstößt, beispielsweise in eine Form einer Tiefzieh-Verpackungsanlage. Im Vergleich zu den vorherigen Ausführungsbeispielen bleibt der Drehteller während des Abfüllens, wenn die Öffnungen 21 und 4 sich gegenüberliegen, stehen.

Wenn der Zylinder 1 voll ist und mit dem voreingestellten Druck $P_{Soll}$ beaufschlagt ist, wird dieser durch Drehen des Drehtellers 14 in Drehrichtung durch die Abdeckung 5 geschlossen, wobei sich gleichzeitig die zweite Form 1 b aus der Ausstoßposition wegbewegt und ein neuer Füllzyklus beginnt. Vorteilhaft ist hier, dass das Füllgut während der Drehung des Drehtellers unter Druck, z.B. 1 bar, abgeschnitten wird. Hieraus resultiert eine hohe Portionsgenauigkeit. Die zu befüllenden Formen 1a,b können natürlich auch in anderen Formationen angeordnet sein (z.B. radial in einer Reihe). Auch bei diesem Ausführungsbeispiel können die Abfüllpositionen der n-Formen 1 auf der Umlaufbahn bestimmt werden, insbesondere die jeweilige ÖffnungsPosition und Schließ-Position der entsprechenden Form, sowie das Füllvolumen der Form, wie zuvor erläutert. Wie zuvor beschrieben, können entsprechende Werte abgespeichert werden. Es ist auch möglich, vor dem eigentlichen Abfüllen einen entsprechenden Lernmodus, wie zuvor erläutert, durchzuführen, und den einzelnen Formen für die Abfüllposition, insbesondere aber die Öffnungs- und Schließ-Position, bestimmte Winkel zuzuordnen, so dass die Steuerung erkennt, dass sich eine bestimmte Form 1 in der Abfüllposition befindet, wenn der Positionsschalter 17 ermittelt, dass sich der Drehteller 14 in einem entsprechenden Winkelbereich bzw. einer entsprechenden Position befindet. Das Abfüllen kann entsprechend dem in Fig. 10c gezeigten Ablauf erfolgen. Die Ansteuerung der Fördereinrichtung 3 erfolgt dabei genauso wie in Zusammenhang mit Fig. 10 mit den vorherigen Ausführungsbeispielen näher erläutert wurde. Im Gegensatz zum vorherigen Ausführungsbeispiel bleibt hier jedoch der Drehzylinder eine vorbestimmte Zeit in der Ausstoßposition steht bis in den Ausstoßbereich in der Form 1b die Lebensmittelmasse komplett ausgestoßen ist. Dann bewegt sich die Form zusammen mit dem Drehteller weiter bis zu einer Schließ-Position, in der die Auslassöffnung 4 und die Öffnung 21 der Form sich nicht mehr überlappen und die Form 1 von unten verschlossen ist. Bei der Ermittlung der gesamten Füllzeit wird zu der Füllzeit, wie sie in den vorherigen Ausführungsbeispielen bestimmt wird, noch die Zeit addiert, in der die Form 1 stillsteht. Somit ist auch in gleicher Weise bei diesem Ausführungsbeispiel eine vorausschauende Einstellung des Portionierprofils möglich.

## Patentansprüche

1. Verfahren zum Herstellen von geformten Lebensmitteln, wobei eine Lebensmittelmasse mit einer Fördereinrichtung (3) in n-hintereinander umlaufende Formen (1) eingefüllt wird, wobei während eines ersten Füllzeitabschnitts ($t_1$) die Fördereinrichtung (3) in einem ersten Füllmodus (A) derart angesteuert wird, dass ein vorbestimmter Anteil des Füllvolumens der jeweiligen Form abgefüllt wird, **dadurch gekennzeichnet, dass** anschließend während eines zweiten Füllzeitabschnitts ($t_2$) der restliche Anteil des Füllvolumens der jeweiligen Form in einem zweiten Füllmodus abgefüllt wird, in dem die Fördereinrichtung (3) in Abhängigkeit des Fülldrucks ($p_{Füll}$) angesteuert wird, derart, dass sich ein vorbestimmter Fülldruck in der Form (1) einstellt.

2. Verfahren nach Anspruch 1, **dadurch gekennzeichnet, dass** $t_1 > t_2$ und die mittlere Förderleistung der Fördereinrichtung während des ersten Füllzeitabschnitts $t_1$ größer ist als während des zweiten Füllzeitabschnitts $t_2$ und insbesondere am Ende des ersten Füllzeitabschnitts ($t_1$) die Leistung der Fördereinrichtung (3) abgesenkt wird.

3. Verfahren nach Anspruch 1 oder 2, **dadurch gekennzeichnet, dass** im zweiten Füllmodus ein Soll-Wert $P_{Soll}$ für den Fülldruck vorgegeben wird, und die Fördereinrichtung (3) angetrieben wird, dass der Ist-Wert des Fülldrucks $P_{Füll}$ dem Soll-Wert entspricht.

4. Verfahren nach mindestens einem der Ansprüche 1 bis 3, **dadurch gekennzeichnet, dass** die Formen (1) an einer Auslassöffnung (4) einer Zuführeinrichtung (4) für die Lebensmittelmasse vorbeigeführt werden und vor und nach dem Befüllen über eine Abdeckung (5) dicht verschlossen werden.

5. Verfahren nach mindestens einem der vorhergehenden Ansprüche, **dadurch gekennzeichnet, dass** vor dem Abfüllbeginn die jeweilige Abfüllposition der n-Formen auf der Umlaufbahn bestimmt wird, insbesondere die jeweilige Form-Öffnungs-Position und die Form-Schließ-Position, sowie das Füllvolumen der Formen bestimmt wird und die Abfüllposition einer Stellung einer Dreheinrichtung (10), mit der sich die Formen drehen, zugeordnet wird.

6. Verfahren nach Anspruch 5, **dadurch gekennzeichnet, dass** zur Bestimmung der Abfüllposition der n-Formen und/oder zur Bestimmung des Füllvolumens der n-Formen die Vorrichtung in einem Lernmodus betrieben wird und die jeweiligen Abfüllpositionen und Füllvolumina in einer Steuerung 8 gespeichert werden.

7. Verfahren nach mindestens Anspruch 5 und 6, **dadurch gekennzeichnet, dass** die Form-Öffnungs-Position bestimmt wird, indem die Fördereinrichtung (3) derart angesteuert wird, dass sich ein konstanter Soll-Wert $P_{Soll}$ für den Fülldruck einstellt, wobei die Form-Öffnungs-Position bei Beginn eines Druckabfalls des Fülldrucks detektiert wird und
die Form-Schließ-Position detektiert wird, wenn der gemessene Fülldruck $P_{Füll}$ wieder anzusteigen beginnt.

8. Verfahren nach mindestens einem der Ansprüche 5 bis 7, **dadurch gekennzeichnet, dass** zur Ermittlung des Volumens der n-Formen die jeweilige Form (1) befüllt wird, wobei detektiert wird, dass die Form voll ist, wenn ein Druckanstieg des Fülldrucks $P_{Füll}$ beginnt, wobei ermittelt wird, welches Volumen von der Fördereinrichtung in der Zeit von der Form-Öffnungs-Position bis zum Druckanstieg ausgestoßen wurde.

9. Verfahren nach mindestens einem der Ansprüche 1 bis 8, **dadurch gekennzeichnet, dass** vor dem Abfüllbeginn die Umlaufgeschwindigkeit der n-Formen bestimmt wird und aus der Form-Öffnungs-Position und Form-Schließ-Position sowie der Umlaufgeschwindigkeit für jede Form die gesamte Füllzeit $t_{Gesamt}$ berechnet wird und die Dauer des ersten Füllzeitabschnitts ($t_1$) und des zweiten Füllzeitabschnitts ($t_2$) sowie der Anteil des Füllvolumens während des ersten Füllzeitabschnitts ($t_1$) und der Anteil des Füllvolumens während des zweiten Füllzeitabschnitts ($t_2$) bestimmt wird.

10. Verfahren nach mindestens einem der Ansprüche 1 bis 9, **dadurch gekennzeichnet, dass** der erste Füllzeitabschnitt $t_1$ 70 bis 98 %, insbesondere 85 bis 95 % der gesamten Füllzeit $t_{Gesamt}$ beträgt.

11. Verfahren nach mindestens einem der Ansprüche 1 bis 10, **dadurch gekennzeichnet, dass** während des ersten Füllzeitabschnitts $t_1$ 70 bis 98 %, insbesondere 90 bis 96 % des Füllvolumens abgefüllt werden.

12. Verfahren nach mindestens einem der Ansprüche 1 bis 11, **dadurch gekennzeichnet, dass** sich während des Abfüllens, bevor sich die Form wieder in der Form-Schließ-Position befindet, das gesamte Füllvolumen eingefüllt wurde und die Form mit dem eingestellten Druck $p_{Soll}$ beaufschlagt ist.

13. Verfahren nach mindestens einem der Ansprüche 1 bis 12, **dadurch gekennzeichnet, dass** eine Form (1) mehrere in einer Reihe nebeneinander angeordnete Formkammern (1 a,b,c,d) umfasst.

14. Vorrichtung zum Durchführen des Verfahrens nach mindestens einem der Ansprüche 1 bis 13 mit einer Fördereinrichtung zum Fördern von Lebensmittelmasse, n-hintereinander umlaufenden Formen, und einer Steuereinrichtung, die derart ausgebildet ist, dass während eines ersten Füllzeitabschnitts ($t_1$) die Fördereinrichtung (3) in einem ersten Füllmodus (A) derart angesteuert wird, dass ein vorbestimmter Anteil des Füllvolumens der Form abgefüllt wird, **dadurch gekennzeichnet, dass** anschließend während eines zweiten Füllzeitabschnitts ($t_2$) der restliche Anteil des Füllvolumens der jeweiligen Form in einem zweiten Füllmodus abgefüllt wird, in dem die Fördereinrichtung (3) in Abhängigkeit des Fülldrucks ($p_{Füll}$) angesteuert wird, derart, dass sich ein vorbestimmter Fülldruck in der Form (1) einstellt.

15. Vorrichtung nach Anspruch 14, **dadurch gekennzeichnet, dass** die Breite der Zuführöffnung der Zuführeinrichtung (2) kleiner ist als der Abstand zwischen zwei Formen bzw. Formreihen in Umfangsrichtung.


**Claims**

1. A method for producing formed foodstuff, with a foodstuff mass being filled with a conveying device (3) into n-successively circulating molds (1), wherein
during a first filling period ($t_1$) the conveying device (3) is controlled in a first filling mode (A) such that a predetermined portion of the filling volume of the respective mold is filled
**characterized in that**
subsequently during a second filling period ($t_2$) the remaining portion of the filling volume of the respective mold is filled in a second filling mode in which the conveying device (3) is controlled in response to the filling pressure ($p_{fill}$) such that a predetermined filling pressure is set in the mold (1).

2. The method according to claim 1, **characterized in that** $t_1 > t_2$ and the mean conveying capacity of the conveying device during the first filling period $t_1$ is greater than during the second filling period $t_2$ and particularly at the end of the first filling period ($t_1$) the capacity of the conveying device (3) is lowered.

3. The method according to claim 1 or 2, **characterized in that** in the second filling mode a target value $P_{target}$ is predetermined for the filling pressure, and the conveying device (3) is driven such that the actual value of the filling pressure $P_{fill}$ corresponds to the target value.

4. The method according to at least one of claims 1 to 3, **characterized in that** the molds (1) are guided past an outlet opening (4) of a supply device (4) for the foodstuff mass and are tightly closed by a cover (5) before and after filling.

5. The method according to at least one of the preceding claims, **characterized in that** prior to the beginning of the filling process the respective filling position of the n-molds on the path of circulation is determined, especially the respective mold opening position and the mold closing position, and the filling volume of the molds is determined and the filling position is assigned to a position of a rotating device (10) with which the molds are rotating.

6. The method according to claim 5, **characterized in that** for the determination of the filling position of the n-molds and/or for the determination of the filling volume of the n-molds the apparatus is operated in a learning mode and the respective filling positions and filling volumes are stored in a controller (8).

7. The method according to at least claim 5 and 6, **characterized in that** the mold opening position is determined **in that** the conveying device (3) is controlled such that a constant target value $P_{target}$ is set for the filling pressure, the mold opening position being detected at the beginning of a pressure drop of the filling pressure and the mold closing position being detected when the measured filling pressure $P_{fill}$ begins to rise again.

8. The method according to at least one of claims 5 to 7, **characterized in that** for the determination of the volume of the n-molds the respective mold (1) is filled, wherein it is detected that the mold is full when a pressure rise of the filling pressure $P_{fill}$ begins, wherein it is determined which volume was ejected by the conveying device during the time from the mold opening position up to the pressure rise.

9. The method according to at least one of claims 1 to 8, **characterized in that** prior to the beginning of the filling process the rotational speed of the n-molds is determined and the total filling time $T_{total}$ is calculated from the mold opening position and from the mold closing position and from the rotational speed for each mold, and the duration of the first filling period ($t_1$) and of the second filling period ($t_2$) and the portion of the filling volume during the first filling period ($t_1$) and the portion of the filling volume during the second filling period ($t_2$) are determined.

10. The method according to at least one of claims 1 to 9, **characterized in that** the first filling period $t_1$ is 70 to 98%, particularly 85-95% of the total filling time $t_{total}$.

11. The method according to at least one of claims 1 to 11, **characterized in that** during the first filling period $t_1$ 70-98%, particularly 90-96%, of the filling volume is filled.

12. The method according to at least one of claims 1 to 11, **characterized in that** during the filling operation, before the mold is again disposed in the mold closing position, the total filling volume has been filled in and the mold is subjected to the set pressure $p_{target}$.

13. The method according to at least one of claims 1 to 12, **characterized in that** a mold (1) comprises a plurality of mold chambers (1a,b,c,d) arranged next to one another in a row.

14. An apparatus for performing the method according to at least one of claims 1 to 13 with a conveying device for conveying foodstuff mass, n-successively circulating molds, and a controlling device which is configured such that during a first filling period ($t_1$) the conveying device (3) is controlled in a first filling mode (A) such that a predetermined portion of the filling volume of the mold is filled
**characterized in that**
subsequently during a second filling period ($t_2$) the remaining portion of the filling volume of the respective mold is filled in a second filling mode in which the conveying device (3) is controlled in response to the filling pressure ($p_{fill}$) such that a predetermined filling pressure is set in the mold (1).

15. The apparatus according to claim 14, **characterized in that** the width of the supply opening (2) of the supply device is smaller than the distance between two molds or mold rows in circumferential direction.

**Revendications**

1. Procédé de fabrication de produits alimentaires conditionnés par moulage ou produits alimentaires moulés, d'après lequel on remplit d'une masse ou pâte de produit alimentaire, n moules (1) en révolution les uns à la suite des autres, à l'aide d'un dispositif de refoulement et de transport (3), et d'après lequel pendant un premier intervalle de temps de remplissage ($t_1$) le dispositif de refoulement et de transport (3) est commandé selon un premier mode de remplissage (A) de façon à effectuer un remplissage selon une fraction prédéterminée du volume de remplissage du moule respectivement considéré,
**caractérisé en ce qu'**ensuite, pendant un deuxième intervalle de temps de remplissage ($t_2$), on effectue le remplissage de la fraction restante du volume de remplissage du moule respectivement considéré, selon un deuxième mode de remplissage, pour lequel le dispositif de refoulement et de transport (3) est commandé en fonction de la pression de remplissage ($p_{Füll}$) de façon à ce qu'il s'établisse une pression de remplissage prédéterminée dans le moule (1).

2. Procédé selon la revendication 1, **caractérisé en ce que** $t_1 > t_2$, et la capacité moyenne de refoulement et de transport du dispositif de refoulement et de transport est plus grande pendant le premier intervalle de temps de remplissage $t_1$ que pendant le deuxième intervalle de temps de remplissage $t_2$, et l'on abaisse la capacité de refoulement et de transport du dispositif de refoulement et de transport (3), notamment à la fin du premier intervalle de temps de remplissage ($t_1$).

3. Procédé selon la revendication 1 ou la revendication 2, **caractérisé en ce que** dans le deuxième mode de remplissage, on prescrit une valeur de consigne $P_{Soll}$ pour la pression de remplissage, et le dispositif de refoulement et de transport (3) est entraîné de manière à ce que la valeur réelle $P_{Füll}$ de la pression de remplissage corresponde à la valeur de consigne $P_{Soll}$.

4. Procédé selon l'une au moins des revendications 1 à 3, **caractérisé en ce que** l'on fait passer les moules (1) audevant d'une ouverture de sortie (4) d'un dispositif d'alimentation (4) pour la masse ou pâte de produit alimentaire, les moules étant fermés de manière étanche avant et après le remplissage à l'aide d'un système de recouvrement (5).

5. Procédé selon l'une au moins des revendications précédentes, **caractérisé en ce qu'**avant le début du remplissage, on détermine la position de remplissage respective des n moules sur la trajectoire de révolution, notamment la position d'ouverture de moule respective et la position de fermeture de moule, ainsi que le volume de remplissage des moules, et l'on affecte la position de remplissage à une position de rotation d'un dispositif de rotation (10) à l'aide duquel tournent les moules.

6. Procédé selon la revendication 5, **caractérisé en ce que** pour déterminer la position de remplissage des n moules et/ou pour déterminer le volume de remplissage des n moules, on fait fonctionner le dispositif dans un mode d'apprentissage, et les positions de remplissage respectives et volumes de remplissage respectifs sont mémorisées dans une commande (8).

7. Procédé selon au moins les revendications 5 et 6, **caractérisé en ce que** l'on détermine la position d'ouverture de moule, en commandant le dispositif de refoulement et de transport (3) de manière à ce qu'il s'établisse une valeur de consigne $P_{Soll}$ constante pour la pression de remplissage, la position d'ouverture de moule étant détectée lors du début d'une chute de pression de la pression de remplissage, et
la position de fermeture de moule étant détectée lorsque la pression de remplissage $P_{Füll}$ mesurée commence à nouveau à augmenter.

8. Procédé selon l'une au moins des revendications 5 à 7, **caractérisé en ce que** pour déterminer le volume des n moules, on remplit le moule (1) respectivement considéré, et l'on détecte que le moule est plein lorsque débute une augmentation de pression de la pression de remplissage $P_{Füll}$, et l'on détermine quel volume a été refoulé par le dispositif de refoulement et de transport pendant le temps allant de la position d'ouverture de moule jusqu'à l'augmentation de pression.

9. Procédé selon l'une au moins des revendications 1 à 8, **caractérisé en ce qu'**avant le début du remplissage, on détermine la vitesse de révolution des n moules, et, à partir de la position d'ouverture de moule et de la position de fermeture de moule, ainsi que de la vitesse de révolution, on calcule pour chaque moule le temps de remplissage total $t_{Gesamt}$, et
on détermine la durée du premier intervalle de temps de remplissage ($t_1$) et du deuxième intervalle de temps de

remplissage ($t_2$), ainsi que la fraction de volume de remplissage pendant le premier intervalle de temps de remplissage ($t_1$) et la fraction de volume de remplissage pendant le deuxième intervalle de temps de remplissage ($t_2$).

10. Procédé selon l'une au moins des revendications 1 à 9, **caractérisé en ce que** le premier intervalle de temps de remplissage ($t_1$) a une valeur de 70 à 98%, notamment de 90 à 96% du temps de remplissage total $t_{Gesamt}$.

11. Procédé selon l'une au moins des revendications 1 à 10, **caractérisé en ce que** pendant le premier intervalle de temps de remplissage ($t_1$), on assure le remplissage de 70 à 98%, notamment de 90 à 96% du volume de remplissage.

12. Procédé selon l'une au moins des revendications 1 à 11, **caractérisé en ce que** pendant le remplissage, avant que le moule se trouve à nouveau dans la position de fermeture de moule, le remplissage de la totalité du volume de remplissage a été effectué et le moule est soumis à la pression $P_{Soll}$ réglée.

13. Procédé selon l'une au moins des revendications 1 à 12, **caractérisé en ce qu'**un moule (1) présente plusieurs cavités de moule (la, b, c, d) côte à côte dans une rangée.

14. Dispositif pour la mise en oeuvre du procédé selon l'une au moins des revendications 1 à 13, comprenant un dispositif de refoulement et de transport pour refouler et transporter une masse ou pâte de produit alimentaire, n moules en révolution l'un à la suite de l'autre, et un dispositif de commande, qui est conçu pour que, pendant un premier intervalle de temps de remplissage ($t_1$), le dispositif de refoulement et de transport (3) soit commandé selon un premier mode de remplissage (A) de façon à effectuer un remplissage selon une fraction prédéterminée du volume de remplissage du moule, **caractérisé en ce qu'**ensuite, pendant un deuxième intervalle de temps de remplissage ($t_2$), est effectué le remplissage de la fraction restante du volume de remplissage du moule respectivement considéré, selon un deuxième mode de remplissage, pour lequel le dispositif de refoulement et de transport (3) est commandé en fonction de la pression de remplissage ($p_{Füll}$) de façon à ce qu'il s'établisse une pression de remplissage prédéterminée dans le moule (1).

15. Dispositif selon la revendication 14, **caractérisé en ce que** la largeur de l'ouverture d'alimentation du dispositif d'alimentation (2) est inférieure à la distance d'espacement entre deux moules ou rangées de moules dans la direction périphérique de révolution.

FIG. 1

FIG. 2

FIG. 3

| Reihe | Form-Volumen [cm³] | Öffnungs-Position [°] | Schließ-Position [°] |
|---|---|---|---|
| 1 | 120 | 23 | 64 |
| 2 | 90 | 96 | 129 |
| 3 | 100 | 145 | 186 |
| 4 | 56 | 209 | 238 |
| 5 | 55 | 264 | 276 |
| 6 | 80 | 302 | 338 |

FIG. 4

6

13

3

9

$V_{pump}$   $Pump_{pos}$

7

5

Steuereinheit
Fördereinrichtung

8a

$A_1$   $A_2$

12b

11

$V_{Form}$

Trommel-
Steuereinheit

8b

Position
Dreheinrichtung

12a

FIG. 5

| Reihe | Form-Volumen [cm³] | Öffnungs-Position [°] | Schließ-Position [°] |
|---|---|---|---|
| 1 | 120 | 23 | 64 |
| 2 | 90 | 96 | 129 |
| 3 | 100 | 145 | 186 |
| 4 | 65 | 209 | 238 |
| 5 | 55 | 264 | 276 |
| 6 | 80 | 302 | 338 |
| 7 | 120 | 383 | 424 |
| 8 | 90 | 456 | 489 |
| 9 | 100 | 505 | 546 |
| 10 | 65 | 569 | 598 |
| 11 | 55 | 624 | 636 |
| 12 | 80 | 662 | 698 |

FIG. 6

FIG. 7a

Öffnungsposition

FIG. 7b

Druck                                    $P_{soll}$

t/Zeit

FIG. 7c

5 Ltr/min

$V_{Pump}$                              $V_{Grenz}$

t/Zeit

FIG. 8a

Schließposition

FIG. 8b

Druck                                    $P_{soll}$

t/Zeit

FIG. 8c

5 Ltr/min

$V_{Pump}$                              $V_{Grenz}$

t/Zeit

FIG. 9a

FIG. 9b

FIG. 9c

FIG. 10a

FIG. 10b

FIG. 10c

FIG. 11

FIG. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012161577 A1